·Europäisches Patentamt

**European Patent Office**

**Office européen des brevets**

(11) Numéro de publication: **0 123 600 B1**

(19)

## (12) FASCICULE DE BREVET EUROPEEN

(51) Int. Cl.⁴: **B 21 D 39/04, F 16 L 13/14, F 16 L 19/02**

(45) Date de publication du fascicule du brevet:
**22.06.88**

(21) Numéro de dépôt: **84400702.1**

(22) Date de dépôt: **10.04.84**

(54) Raccordement de tube comportant l'ancrage d'une bague sur son extrémité.

(30) Priorité: **11.04.83 FR 8305872**

(43) Date de publication de la demande:
**31.10.84 Bulletin 84/44**

(45) Mention de la délivrance du brevet:
**22.06.88 Bulletin 88/25**

(84) Etats contractants désignés:
**BE DE GB IT LU NL SE**

(56) Documents cités:
**DE - C - 192 072**
**DE - C - 540 825**
**FR - A - 1 064 906**
**FR - A - 1 536 521**
**FR - A - 2 171 718**
**GB - A - 2 024 973**
**US - A - 2 857 666**
**US - A - 3 467 414**
**US - A - 3 730 567**
**US - A - 4 130 932**

(73) Titulaire: **HYDEXCO, Société dite:, 16 rue Loius Rameau, F-95870 Bezons (FR)**

(72) Inventeur: **Foucault, Joel, 42 rue Costes et Bellonte, F-41000 Blois (FR)**
Inventeur: **Bonnargent, Alain, 27 Boulevard de la République, F-78360 Montesson (FR)**

(74) Mandataire: **Corre, André, Cabinet Corre A. 17, rue Pasteur, F-92300 Levallois (FR)**

EP 0 123 600 B1

ACTORUM AG

## Description

L'invention concerne les raccordements de tubes. Elle concerne notamment les raccordements de tubes de faible diamètre et/ou à paroi mince, tels ceux utilisés, pour la distribution de carburant dans les moteurs d'avions ou d'automobiles.

Généralement pour réaliser un tel raccordement, on munit d'abord l'extrémité externe du tube à raccorder d'une bague cylindrique ancrable sur la dite extrémité, puis on enserre la bague dans un corps de raccord avec un écrou se vissant sur lui. Il est impératif que l'ancrage de la bague sur le tube ne provoque pas de lignes ou de zônes d'affaiblissement, surtout en cas de faible épaisseur de la paroi du tube. Le procédé qui semble avoir le mieux satisfait à ces exigences techniques d'ancrage comporte la déformation par dudgeonnage de l'extrémité du tube à l'intérieur de la bague. Le procédé de dudgeonnage est très ancien, et consiste à introduire, dans le tube, un mandrin dont le diamètre est variable pour provoquer une pression radiale interne repoussant le tube contre la paroi interne de la bague prévue avec nervures et gorges. Selon ce procédé on introduit dans le tube un mandrin compressible axialement, puis à l'aide d'un système approprié on provoque l'extension de sa circonférence au niveau des gorges de la bague et l'on emboutit ainsi radialement la paroi du tube en direction du fond des dites gorges. Puis après avoir réalisé cette déformation du tube de l'intérieur, on supprime l'effort de compression et on retire le mandrin. Le tube reste ancré dans sa bague, et peut alors être raccordé de façon usuelle à l'aide d'un corps de raccord et un écrou se vissant sur lui.

Dans le brevet FR-A-1.064.906, au nom de «The British Oxygen CY», pour: Joint de tubes métalliques dans une pièce métallique, on a décrit un autre procédé de fixation d'un tube métallique, dans un trou d'une pièce métallique. Ce procédé consiste à usiner une rainure périphérique dans le trou, à tarauder le tube et à enlever de la matière à l'extrémité du tube, à placer le tube dans le trou de façon que son extrémité se trouve en-dessous de la surface supérieure de la pièce, à introduire un mandrin dans le tube, à faire coulisser une pièce de poussée sous l'effet d'un écrou qu'on visse sur le mandrin et exercer une pression sur la section terminale du tube. Cette pression provoque le refoulement de la matière (alliage d'aluminium) constituant le tube, dans la rainure de la pièce. La rainure est alors complètement bouchée et la matière refoulée constitue un joint en surépaisseur, assurant la fixation inamovible du tube sur la pièce métallique. Par ce procédé le tube est fixé directement à une pièce métallique sans bague intermédiaire. Ce procédé complexe ne peut pas être utilisé avec un tube en métal dur, ni avec un tube à paroi mince non taraudable, ni pour raccorder deux tubes bout à bout.

Le brevet US-A-3.730.567, au nom de Frank R. Webster, décrit une bague de raccordement tubulaire avec une surépaisseur sensiblement en son milieu.

La bague (ou manchon) est relativement longue et, pour assurer un ancrage suffisant comporte deux gorges successives destinées à déterminer des nervures de séparation et une nervure d'extrémité. La déformation du tube étant limitée, la présence dans la bague de plusieurs nervures est obligatoire pour assurer un accrochage convenable. La présence de nervures provoque des pliures alternées et rapprochées de la paroi du tube avec formation de ligne d'affaiblissement, qui sont aggravées lors de l'enserrement de la bague dans le corps de raccord et de l'écrou de serrage. En outre, du fait de l'existence de deux gorges la surépaisseur extérieure de la bague correspond seulement à la gorge la plus centrale, et une zone mince correspond à la gorge d'extrémité, cette zone est fragile et engendre un risque de rupture incompatible avec les exigences techniques de plus en plus sévères.

Pour remédier à ces inconvénients, l'invention se rapporte à un procédé pour l'ancrage étanche d'un tube métallique dans une pièce métallique comportant un trou prévu à cet effet avec une rainure périphérique, à l'aide d'un mandrin, placé à l'intérieur du tube, muni d'un épaulement externe pouvant exercer une pression sur la section terminale du tube et provoquer la déformation du tube dans la rainure, procédé caractérisé en ce que le tube métallique qui traverse la pièce est à paroi mince convenablement retenue par un manchon disposé derrière la pièce, et que ladite pièce métallique est une bague, comportant au moins une large gorge circulaire interne convenablement retenue par des coquilles empêchant sa déformation, et en ce qu'on enfonce la partie étroite du mandrin à l'intérieur du tube de façon qu'en fin de course l'épaulement fasse pression sur la section terminale obligeant la paroi mince du tube à se déformer au niveau de la gorge de la bague et à en épouser le contour après quoi le mandrin, le manchon et les coquilles sont retirés, laissant la bague solidement ancrée sur le tube. Le tube et la bague formant un ensemble amovible fixable à un autre tube, à un appareil ou à un autre objet, à l'aide d'un raccord classique ou non.

La déformation du tube est obtenue uniquement au niveau de la gorge (ou des gorges) de la bague, le tube (éventuellement avec sa bague) est maintenu extérieurement par un ou des manchons et/ou des coquilles, et intérieurement par le mandrin de diamètre approprié, de telle manière que la seule zône d'expansion soit déterminée par la gorge de la bague. Selon un mode d'exécution du procédé, l'introduction du mandrin dans le tube et la pression sur la section terminale de ce tube s'effectuent simultanément en fin de course du mandrin. A cet effet, le mandrin comporte un épaulement approprié pour buter, puis exercer une pression sur la section terminale du tube. Selon un autre mode d'exécution, le tube dépasse légèrement la bague et le mandrin comporte deux épaulements successifs, de telle manière que lors de son introduction dans le tube, le premier épaulement provoque un évasement du tube et le second exerce une pression sur la section terminale de ce même tube. Selon encore un autre mode de réalisation de l'invention, on utilise successivement deux mandrins. Le premier mandrin comporte un seul épaulement qui est appliqué sur la section terminale du tube et sert uniquement à exercer la pression nécessaire à la déformation au niveau de la ou des gorges de la bague. Pendant cette opération la partie du tube dépassant la bague est maintenue par un manchon approprié. Après retrait de ce premier mandrin, un second mandrin comportant un seul épaulement et une partie plus large est introduit dans le tube pour évaser la partie dépassant la bague et appliquer la déformation formée sur le nez de la dite bague.

L'invention porte non seulement sur le procédé, mais également sur un ensemble de raccordement selon le préambule de la revendication 4. La bague utilisée comporte un conduit cylindrique sans nervure ni autre aspérité interne, mais avec une gorge large située au niveau d'une surépaisseur extérieure, prévue de préférence sensiblement en son milieu. Avantageusement, la bague comporte à l'intérieur de la première gorge, une deuxième gorge. Cette deuxième gorge a une largeur moindre, mais un diamètre supérieur à la première gorge. Cette deuxième gorge peut être prévue n'importe où dans le fond de la première gorge, par exemple, soit le long d'un bord de la première gorge, soit au centre de cette première gorge de telle manière qu'une plage circulaire de la dite première gorge subsiste de part et d'autre de la deuxième gorge, déterminant ainsi les épaulements d'ancrage et d'étanchéité nécessaires. Dans le cas de sertissage selon le procédé, dans une bague à une gorge, la paroi du tube présente deux zônes circulaires d'attachement correspondant aux deux épaulements déterminés par la gorge à l'intérieur de la bague. Dans le cas de sertissage dans une bague à gorges concentriques, la paroi du tube présente trois ou quatre zônes circulaires d'attachement correspondant aux deux, ou trois épaulements déterminés par les deux gorges circulaires à l'intérieur de la bague (selon que la deuxième gorge est située à une extrémité ou non de la première gorge). Par ailleurs, la partie évasée du tube dépasse la bague et la zône de déformation (reliant la partie évasée à la partie non évasée) est appliquée sur le nez de ladite bague, ce qui constitue un épaulement supplémentaire et donc une zône circulaire d'attachement supplémentaire.

Après l'obtention de la déformation de l'extrémité du tube, le mandrin et les manchons sont retirés et le tube serti dans sa bague peut alors être raccordé à l'aide d'un corps de raccord et de l'écrou se vissant sur lui.

Pour mieux faire comprendre l'invention il est donné ci-après des exemples de réalisation en référence aux dessins annexés dans lesquels:

fig. 1 à 3 sont des coupes de trois bagues selon l'invention,

fig. 4 à 9 montrent schématiquement les phases successives du procédé de sertissage du tube dans sa bague,

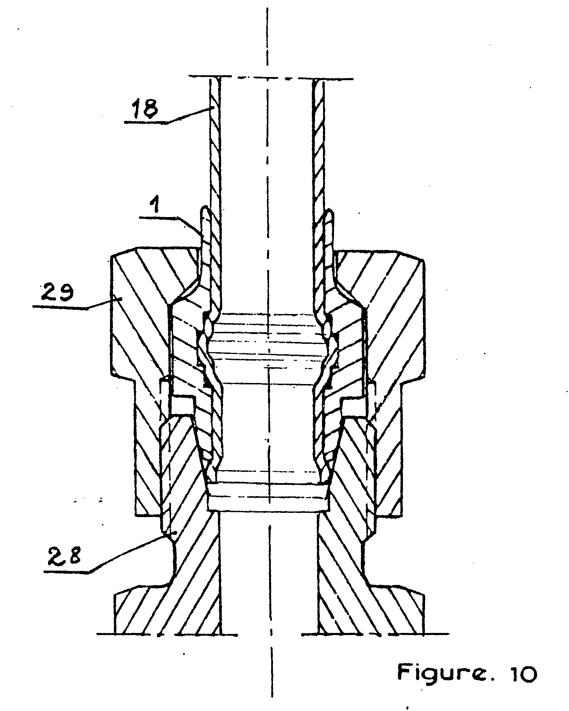

fig. 10 montre le raccordement final.

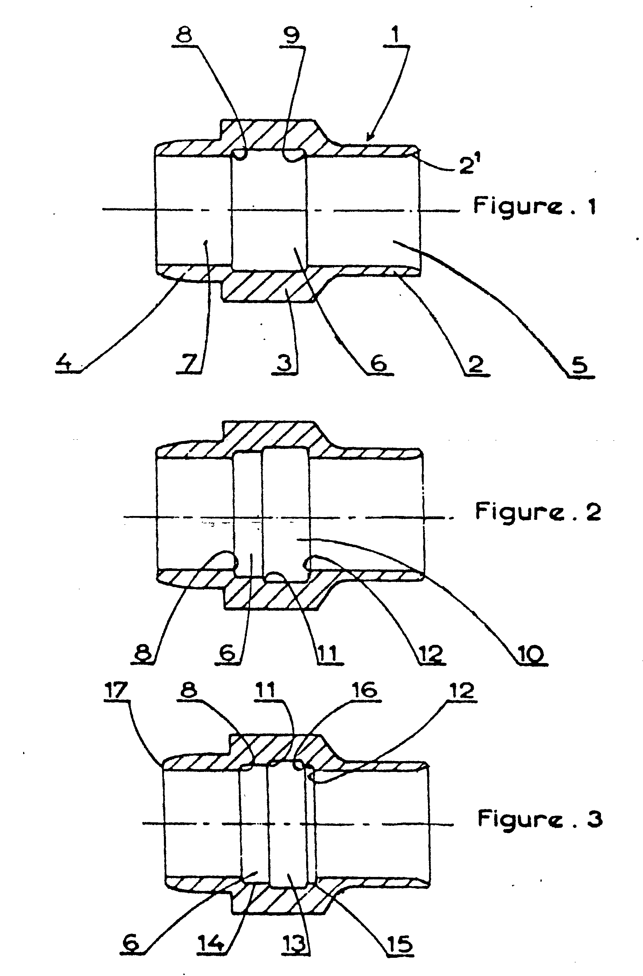

La fig. 1 représente en coupe une bague 1 présentant extérieurement une tubulure 2 avec une embouchure 2', au centre un renforcement 3 et, à l'autre extrémité, une tubulure 4 sans embouchure intérieure, mais avec une pente extérieure (de préférence un secteur sphérique). Intérieurement, et également de droite à gauche, la bague 1 comporte un conduit 5, une gorge 6 et un conduit 7. Les conduits 5 et 7 sont de même diamètre et à paroi lisse. La gorge 6 est d'un diamètre sensiblement plus grand avec une paroi lisse cylindrique. La gorge 6 présente des épaulements 8 et 9 en sens opposé.

La fig. 2 représente une bague identique à la fig. 1 mais avec une deuxième gorge 10, concentrique à la première 6, et comportant un épaulement 11 (du même sens que l'épaulement 8) et un épaulement 12 remplaçant l'épaulement 9 et plus prononcé.

La fig. 3 représente une bague identique à la fig. 1, mais avec une gorge 13 concentrique à la gorge 6, en son centre, de manière à déterminer des plages 14 et 15 ainsi que des épaulements 11 et 16. Ainsi, cette bague présente les épaulements 8 et 11 dans un sens, et 16 et 12 dans l'autre sens. A ces quatre épaulements centraux, il faut ajouter le nez 17 de la bague, qui joue également le rôle d'épaulement lorsque le tube est évasé.

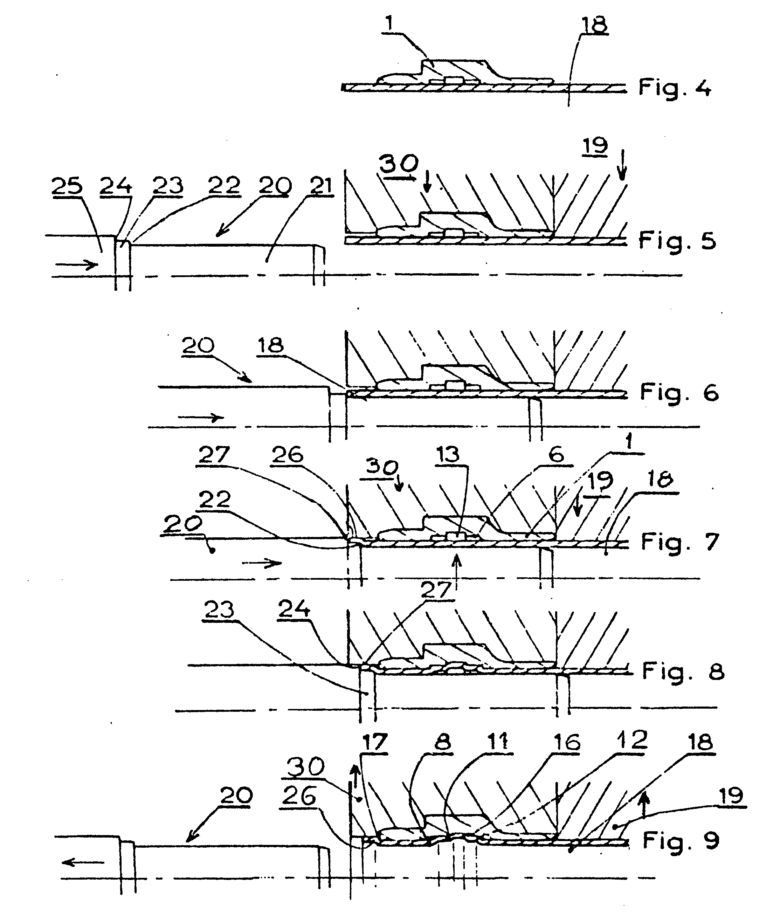

Le procédé de sertissage est illustré par les fig. 4 à 9. La bague 1 est enfilée sur le tube 18 de façon qu'il la dépasse. Un manchon 19 est appliqué sur le tube pour le maintenir en place, et éventuellement des coquilles 30 peuvent être prévues pour soutenir la bague 1. Les manchons et coquilles empêchent des déformations du tube à des endroits non désirés. Le mandrin 20 est plein et est constitué de trois parties cylindriques de diamètres croissants 21, 23, 25 déterminant entre elles des épaulements 22 et 24. Lorsque l'on introduit le mandrin 20 à l'intérieur du tube 18, la partie 21 s'enfonce normalement jusqu'à l'épaulement 22 légèrement incliné de telle manière que la partie 23 pénètre à son tour à l'intérieur du tube 18 l'évasant en 26 jusqu'à ce que son pourtour 27 vienne buter contre l'épaulement 24. En poursuivant sa pression, sous l'effet de moyens connus, l'épaulement 24 exerce une très forte pression sur la section terminale 27 du tube 18 dont la paroi se trouve repoussée à l'intérieur de la bague 1. Sous cette pression, le tube 18 qui est bloqué dans le manchon 19 tend à se déformer uniquement au niveau de la bague 1 et pénètre dans ses gorges 6 et 13. La pression continuant, la paroi 18 prend appui sur les différents épaulements internes. Simultanément la matière, dont est constituée le tube, est tassée et la paroi à tendance à s'épaissir au lieu de s'amincir comme dans le dudgeonnage, et aussi à se durcir, conférant à l'extrémité du tube ainsi traité une robustesse supérieure. En outre la déformation 26 de la partie évasée du tube 18 est appliquée sur le nez 17 de la bague 1. Après retrait du mandrin 20, le tube 18 reste serti dans la bague et présente cinq points d'ancrage en relation avec les épaulements 8, 11, 16, 12, 17. Finalement le manchon 19 est également retiré.

Le tube 18 muni de sa bague 1 est placé dans le corps de raccord 28 sur lequel se visse l'écrou 29. La partie évasée du tube 18 dépasse alors de la bague 1 d'une distance telle que sa partie terminale vient en contact avec le cône de raccord 28 de façon à réaliser une liaison mécanique directe entre le tube 18 et le corps de raccord 28, et éventuellement une étanchéité supplémentaire.

Bien que conçu plus particulièrement pour des petits tubes de petit diamètre et/ou à paroi mince pour lesquels le dudgeonnage est difficilement réalisable, la présente invention s'applique aussi aux autres tubes. De plus les mandrins peuvent être conçus pour des tubes ayant des sections quelconques.

**Revendications**

1. Procédé pour l'ancrage étanche d'un tube métallique dans une pièce métallique comportant un trou prévu à cet effet avec une rainure périphérique, à l'aide d'un mandrin, placé à l'intérieur du tube, muni d'un épaulement externe pouvant exercer une pression sur la section terminale du tube et provoquer la déformation du tube dans la rainure, procédé caractérisé en ce que le tube métallique qui traverse la pièce est à paroi mince (18) convenablement retenue par un manchon (19) disposé derrière la pièce, et que ladite pièce métallique est une bague (1), comportant au moins une large gorge circulaire interne (6), convenablement retenue par des coquilles (30) empêchant sa déformation, et en ce qu'on enfonce la partie étroite (21) du mandrin (20) à l'intérieur du tube (18) de façon qu'en fin de course l'épaulement (22) fasse pression sur la section terminale obligeant la paroi mince (18) du tube à se déformer au niveau de la gorge (6) et à en épouser le contour, après quoi le mandrin (20), le manchon (19) et les coquilles (30) sont retirés, laissant la bague (1) solidement ancrée sur le tube.

2. Procédé selon la revendication 1, caractérisé en ce que l'on utilise un mandrin (20) comportant deux épaulements (22, 24) dans un tube (18) disposé de façon à dépasser la bague (1) de manière que cette partie dépassante soit légèrement évasée par l'épaulement (22), tandis que la pression sur la section terminale (27) est exercée par l'épaulement (24).

3. Procédé selon la revendication 1, caractérisé en ce que l'on utilise deux mandrins, un mandrin avec un épaulement approprié pour exercer la pression nécessaire sur la section terminale (27) du tube (18) afin d'obtenir sa déformation au niveau de la gorge de la bague, et un deuxième mandrin pour évaser la partie de tube (18) dépassant la bague (1) et appliquer la déformation obtenue sur le nez (17) de ladite bague (1).

4. Ensemble de raccordement formé d'un tube à paroi mince et da sa bague, ladite bague étant constituée par un cylindre présentant extérieurement, sensiblement en son milieu, un renforcement périphérique précédé et suivi d'une tubulure de moindre épaisseur, et comportant intérieurement des creusures circulaires, ensemble caractérisée en ce que la bague (1) comporte une seule gorge (6) large et relativement profonde au niveau du renforcement (3), et sans aucune nervure dans son fond, de telle manière qu'après fixation sur le tube (18), dont la paroi épouse le contour de la gorge, le tube ne présentant pas d'alternance de nervures et rainures.

5. Ensemble de raccordement selon la revendication 4, caractérisé en ce qu'une gorge supplémentaire (13) est prévue dans la première gorge (6) de telle manière que des plages circulaires (14 et 15) subsistent de part et d'autre de la gorge supplémentaire (13), déterminant ainsi deux épaulements (8 et 11) dans un sens, et deux épaulements (16 et 12) en sens opposé.

6. Ensemble de raccordement selon la revendication 4, caractérisé en ce que, après déformation dans la bague (1), le tube (18) s'accroche en deux zones circulaires d'attachement correspondant aux deux épaulements (8 et 12) déterminés par la gorge (6) à l'intérieur de la bague (1).

7. Ensemble de raccordement selon la revendication 5, caractérisé en ce que, après déformation dans la bague (1) la paroi du tube (18) épouse le pourtour des deux gorges (6 et 10) ou (6 et 13), et présente deux ou trois zones circulaires d'attachement correspondant aux trois ou quatre épaulements (8, 11, 12) ou (8, 11, 16, 12) déterminés par les deux gorges circulaires à l'intérieur de la bague (1).

8. Ensemble de raccordement selon la revendication 6 ou 7, caractérisé en ce que le tube (18) dépasse légèrement la bague (1) dont l'extrémité circulaire (17) équivaut à un autre épaulement et qu'il est très légèrement évasé déterminant ainsi une zone circulaire (26) d'attachement et d'étanchéité supplémentaire.

9. Dispositif de raccordement d'un tube muni de sa bague selon l'une quelconque des revendications 4 à 8, enserré dans un corps de raccord et l'écrou se vissant sur lui, caractérisé en ce que la partie terminale du tube (18) dépasse la bague (1) d'une longueur suffisante pour venir en contact avec le cône du raccord et réaliser ainsi une liaison mécanique directe entre le tube (18) et le corps de raccord (28).

**Patentansprüche**

1. Verfahren zur dichten Verankerung eines Metallrohres in einem Metallteil, welches eine zu diesem Zweck vorgesehene Bohrung mit einer peripherischen Nute aufweist, mittels eines in das Rohr eingeführten Dorns, der einen äußeren Absatz besitzt, welcher einen Druck auf den Endquerschnitt ausüben und die Verformung des Rohres in die Nute bewirken kann, dadurch gekennzeichnet, daß das durch das Teil hindurchgehende Metallrohr eine dünne Wand (18) hat, die zweckentsprechend durch eine hinter dem Teil angeordnete Muffe (19) gehalten wird, und daß das Metallteil ein mit mindestens einer breiten, kreisförmigen Innenkehle (6) versehener Ring (1) ist, welcher zweckentsprechend durch seine Verformung verhindernde Schalen (30) gehalten wird, und daß man den dünnen Teil (21) des Dorns (20) so in das Rohr (18) hineinstößt, daß am Ende des Hubes der Absatz (22) auf den Endquerschnitt drückt und die dünne Rohrwand (18) zwingt, sich in der Höhe der Kehle (6) zu verformen und sich deren Kontur anzupassen, wonach der Dorn (20), die Muffe (19) und die Schalen (30) zurückgezogen werden, um den Ring (1) fest auf dem Rohr verankert zu lassen.

2. Verfahren gemäß Anspruch 1, dadurch gekennzeichnet, daß man einen mit zwei Absätzen (22, 24) versehenen Dorn (20) in einem Rohr (18) verwendet, welches so angeordnet ist, daß es gegenüber dem Ring (1) vorsteht, so daß dieser hervorstehende Teil leicht durch den Absatz (22) aufgeweitet wird, während der Druck auf den Endquerschnitt (27) durch den Absatz (24) ausgeübt wird.

3. Verfahren gemäß Anspruch 1, dadurch gekennzeichnet, daß man zwei Dorne verwendet, und zwar einen Dorn mit einem geeigneten Absatz zum Ausüben des erforderlichen Druckes auf den Endquerschnitt (27) des Rohres (18), um dessen Verformung in Höhe der Ringkehle zu erzielen, und einen zweiten Dorn, um den gegenüber dem Ring (1) hervorstehenden Teil des Rohres (18) aufzuweiten und die so erzielte Verformung auf die Nase (17) des besagten Ringes (1) zu drücken.

4. Verbindungselement, bestehend aus einem dünnwandigen Rohr und dessen Ring, welcher durch einen Zylinder gebildet wird, der deutlich in seiner Mitte eine peripherische Verstärkung mit einem vorderen und einem hinteren Rohrstutzen geringerer Stärke und in seinem Inneren kreisförmige Ausnehmungen aufweist, dadurch gekennzeichnet, daß der Ring (1) eine einzige breite und relativ tiefe Kehle (6) in Höhe der Verstärkung (3) und keinerlei Rippe in seinem Grund besitzt, so daß nach Befestigung auf dem Rohr (18), dessen Wand sich der Kontur der Kehle anpaßt, das Rohr keine abwechselnden Rippen und Nuten aufweist.

5. Verbindungselement gemäß Anspruch 4, dadurch gekennzeichnet, daß in der ersten Kehle (6) eine zusätzliche Kehle (13) vorgesehen ist, und zwar dergestalt, daß diesseits und jenseits der zusätzlichen Kehle (13) kreisförmige Zonen stehenbleiben, wodurch sich in einer Richtung zwei Absätze (8 und 11) und in der entgegengesetzten Richtung zwei Absätze (16 und 12) ergeben.

6. Verbindungselement gemäß Anspruch 4, dadurch gekennzeichnet, daß sich das Rohr (18) nach Verformung im Ring (1) an zwei kreisförmigen Befestigungszonen einhakt, welche an den beiden durch die Kehle (6) im Inneren des Ringes (1) bestimmten Absätzen (8 und 12) entsprechen.

7. Verbindungselement gemäß Anspruch 5, dadurch gekennzeichnet, daß die Wand des Rohres (18) sich nach Verformung im Ring (1) der Kontur der beiden Kehlen (6 und 10) bzw. (6 und 13) anpaßt und zwei bzw. drei kreisförmige Befestigungszonen aufweist, welche den drei bzw. vier durch die beiden kreisförmigen Kehlen im Inneren des Ringes (1) bestimmten Absätzen (8, 11, 12) bzw. (8, 11, 16, 12) entsprechen.

8. Verbindungselement gemäß Anspruch 6 oder 7, dadurch gekennzeichnet, daß das Rohr (18) leicht gegenüber dem Ring (1) hervorsteht, dessen kreisförmiges Ende (17) einem weiteren Absatz gleichkommt, und daß das Rohr ganz leicht aufgeweitet ist, wodurch eine zusätzliche kreisförmige Befestigungs- und Dichtungszone (26) gebildet wird.

9. Verbindungsvorrichtung für ein mit seinem Ring versehenes Rohr gemäß irgendeines der Ansprüche 4 bis 8, eingeschlossen in einem Verbindungskörper und der auf diesen aufgeschraubten Mutter, dadurch gekennzeichnet, daß der Endabschnitt des Rohres (18) gegenüber dem Ring (1) um eine ausreichende Länge vorsteht, um mit dem Verbindungskegel in Berührung zu kommen und so eine direkte mechanische Verbindung zwischen dem Rohr (18) und dem Verbindungskörper (28) herzustellen.

## Claims

1. A method for the secure anchorage of a metallic tube in a metallic piece having a cavity provided for this purpose with a peripheral groove with the aid of a mandrel located in the interior of the tube and provided with an external shoulder to exert a pressure on the end section of the tube and to cause deformation of the tube in the groove, which method is characterised in that the metallic tube which traverses the piece has a thin wall (18) suitably retained by socket means (19) located behind the piece and that the said metallic piece is a sleeve (1), having at least one large circular internal channel (6) which is suitably retained by shells (30) preventing its deformation, and by the fact that one drives the narrower part (21) of the mandrel (20) into the interior of the tube (18) in such a fashion that, at the end of the stroke, the shoulder (22) exerts pressure on the end section, causing the thin wall (8) of the tube to be deformed at the location of the channel (6) and the contour to be pushed in, after which the mandrel (20), the socket means (19) and the shells (30) are withdrawn, leaving the sleeve (1) firmly anchored on the tube.

2. A method according to claim 1, characterised in that use is made of a mandrel (20) comprising two shoulders (22, 24) which is inserted in the tube (18) so as to extend beyond the sleeve (1) in such a manner that this extending portion is slightly expanded by the shoulder (22), whereas the pressure on the end portion (27) is applied by the shoulder (24).

3. A method according to claim 1, characterised in that use is made of two mandrels, one of which has a shoulder suitable for applying the necessary pressure to the end portion (27) of the tube (18) so as to cause it to be deformed in the zone of the channel in the sleeve, while the second mandrel expands the portion of the tube (18) extending beyond the sleeve (1) and applies the deformation achieved to the end (17) of said sleeve (1).

4. A connecting assembly comprising a thin-walled tube and its sleeve, the sleeve being formed by a cylinder having a peripheral external reinforcement substantially midway along it which is preceded and followed by a tubular portion of reduced thickness and having internal circular channels, which assembly is characterised by the fact that the sleeve (1) comprises a single wide channel (6) of comparatively great depth at the level of the reinforcement (3) and without any rib in its base in such a manner that, after being fixed on the tube (18) the wall of which fits the contour of the channel, the tube does not have either ribs or grooves.

5. A connecting assembly according to claim 4, characterised in that an additional channel (13) is formed in the first channel (6) in such a manner that circular areas (14 and 15) are formed on each side of the additional channel (13), thus defining two shoulders (8 and 11) facing in one direction and two shoulders (16 and 12) facing in the opposite direction.

6. A connecting assembly according to claim 4, characterised in that, after the sleeve (1) has been deformed, the tube (18) becomes locked in two circular attachment zones corresponding to the two shoulders (8 and 12) defined by the channel (6) within the sleeve (1).

7. A connecting assembly according to claim 5, characterised in that, after the sleeve (1) has been deformed, the wall of the tube (18) matches the periphery of the two channels (6 and 10) or (6 and 13) and has two or three circular attachment zones corresponding to three or four of the shoulders (8, 11, 12) or (8, 11, 16, 12) defined by the two circular channels within the sleeve (1).

8. A connecting assembly according to claim 6 or 7, characterised in that the tube (18) extends slightly beyond the sleeve (1), the circular end (17) of which constitutes a further shoulder, and in that it is very slightly expanded so as to form a supplementary circular attachment and sealing zone (26).

9. A connecting arrangement of a tube provided with a sleeve according to any one of claims 4-8 which is inserted in a joint member and has a nut screwed on to it, characterised in that the end portion of the tube (18) extends beyond the sleeve (1) over a length sufficient to bring it into contact with the cone of the joint and thus to establish a direct mechanical connection between the tube (18) and the joint member (28).

Figure . 1

Figure . 2

Figure . 3

Fig. 4

Fig. 5

Fig. 6

Fig. 7

Fig. 8

Fig. 9

Figure. 10